# EUROPÄISCHE PATENTSCHRIFT

(11) **EP 1 323 940 B1**
(45) Veröffentlichungstag und Bekanntmachung des Hinweises auf die Patenterteilung: **21.07.2004**
(21) Anmeldenummer: 02026924.7
(22) Anmeldetag: 03.12.2002
(51) Int. Cl.: F16D 23/06

(54) **Schaltkupplung für ein Stirnradgetriebe**
Clutch for spur gear drive
Embrayage pour engrenage cylindrique

(30) Priorität: 27.12.2001 DE 10164203
(43) Veröffentlichungstag der Anmeldung: 02.07.2003
(73) Patentinhaber: Getrag SynchronTechnik GmbH, 71720 Oberstenfeld (DE)
(72) Erfinder: Tarantini-Grimmeisen, Claudio, 71706 Markgröningen (DE); Pfannschmidt, Jörn, 71642 Ludwigsburg (DE); Thiel, Christina, 74391 Erligheim (DE)
(74) Vertreter: Steil, Christian, Dipl.-Ing.

(56) Entgegenhaltungen:
- FR-A- 2 787 535
- US-A- 4 189 041

## Beschreibung

Die vorliegende Erfindung betrifft eine Schaltkupplung für ein Stirnradgetriebe, insbesondere ein Kraftfahrzeuggetriebe, mit einer Führungsmuffe, die an einer Welle des Stirnradgetriebes festlegbar ist und eine Außenverzahnung aufweist, einer Schaltmuffe, die eine Innenverzahnung aufweist, die mit der Außenverzahnung der Führungsmuffe kämmt, so, daß die Schaltmuffe axial gegenüber der Führungsmuffe verschieblich ist, und einem Kupplungskörper, der an einem Losrad festlegbar ist, das an der Welle drehbar gelagert ist, und eine Außenverzahnung aufweist, in die die Innenverzahnung der Schaltmuffe geschoben werden kann, um den Kupplungskörper in Drehrichtung formschlüssig mit der Führungsmuffe zu verbinden, wobei die mit der Außenverzahnung des Kupplungskörpers in Eingriff tretende Innenverzahnung der Schaltmuffe Zähne mit einer Hinterlegung und ferner hinterlegungsfreie Zähneaufweist, die mit der Außenverzahnung der Führungsmuffe in Eingriff stehen, wobei die hinterlegten und die hinterlegungsfreien Zähne über den Umfang der Schaltmuffe verteilt angeordnet sind, und mit Mitteln, um Verklemmungen zwischen den hinterlegten Zähnen und der Außenverzahnung der Führungsmuffe zu vermeiden.

Eine derartige Schaltkupplung ist bekannt aus der US-A-4,189,041.

Gattungsgemäße Schaltkupplungen können sowohl rein formschlüssig wirkende Schaltkupplungen sein, als auch solche Schaltkupplungen, die dazu in der Lage sind, durch Reibeingriff eine Drehzahlanpassung zwischen Welle und Losrad zu erreichen. Dies wird gewöhnlich über Reibkegel erreicht.

Ferner beinhalten die gattungsgemäßen Schaltkupplungen auch Sperr-Synchronisierungen, bei denen ein Synchronring in an sich bekannter Weise begrenzt verdrehbar gegenüber der Führungsmuffe gelagert ist.

Um zu vermeiden, daß die Innenverzahnung der Schaltmuffe aufgrund von Vibrationen oder dergleichen versehentlich aus der Außenverzahnung des Kupplungskörpers ausspurt, sind Zähne der Innenverzahnung der Schaltmuffe mit einer Hinterlegung versehen. Entsprechend sind an Zähnen des Kupplungskörpers häufig ebenfalls Hinterlegungen vorhanden.

Die Hinterlegungen haben jedoch den Nachteil, daß es bei Auftreten von Kippmomenten zwischen Schaltmuffe und Führungsmuffe zu Verklemmungen kommen kann. Dies macht sich u.a. durch eine erhöhte Schaltkraft/Sperren bemerkbar.

Um dieses Problem zu lindern, sind die Hinterlegungen in axialer Richtung häufig vergleichsweise lang ausgebildet. Dies führt jedoch zu einer Verkleinerung der Fläche zur Kraftübertragung in Umfangsrichtung.

Um das Problem von Verklemmungen zu vermeiden, ist in der EP 1 101 966 A2 vorgeschlagen, die Zähne der Innenverzahnung der Schaltmuffe sämtlich in Radialrichtung in einen ersten Abschnitt und einen zweiten Abschnitt zu unterteilen. Der radial innenliegende Abschnitt ist mit Hinterlegungen versehen und dazu ausgelegt, mit dem Kupplungskörper in Eingriff zu treten. Der radial außenliegende Abschnitt ist hingegen hinterlegungsfrei ausgebildet und tritt über die ganze axiale Länge der Innenverzahnung mit der Außenverzahnung der Führungsmuffe in Eingriff. Die Zähne der Innenverzahnung der Schaltmuffe sind sämtlich identisch ausgebildet.

Vor dem obigen Hintergrund ist es die Aufgabe der vorliegenden Erfindung, eine verbesserte Schaltkupplung für ein Stirnradgetriebe anzugeben, die hinsichtlich der Gleiteigenschaften zwischen Schaltmuffe und Führungsmuffe sowie hinsichtlich des Eingriffs zwischen Innenverzahnung der Schaltmuffe und des Kupplungskörpers optimiert ist.

Diese Aufgabe wird bei der eingangs genannten Schaltkupplung für ein Stirnradgetriebe dadurch gelöst, daß die hinterlegten Zähne der Innenverzahnung der Schaltmuffe mit der Außenverzahnung des Kupplungskörpers, jedoch nicht mit der Außenverzahnung der Führungsmuffe in Eingriff treten.

Durch die erfindungsgemäßen Maßnahmen wird eine Funktionstrennung zwischen solchen Zähnen erreicht, die für den Formschluß zwischen Schaltmuffe und Kupplungskörper verantwortlich sind, und solchen Zähnen, die im wesentlichen für die Gleiteigenschaften zwischen Schaltmuffe und Führungsmuffe verantwortlich sind.

Dadurch, daß die hinterlegten Zähne nicht mit der Außenverzahnung der Führungsmuffe in Eingriff treten, sind die Gleiteigenschaften in axialer Richtung verbessert. Die Schaltmuffe wird folglich ausschließlich an nicht hinterlegten Zähnen an der Führungsmuffe geführt. Hierdurch läßt sich die Führungslänge erhöhen. Dies wiederum ermöglicht eine deutliche Verringerung des Kippspiels. Bei den hinterlegten Zähnen ist es möglich, die Hinterlegungslänge zu verkürzen, da die hinterlegten Zähne nicht mit der Außenverzahnung des Synchronrings in Eingriff treten. Dies führt zu einer minimalen Zerspanung und zu einer erhöhten Festigkeit des Zahnes.

Die Anspitzwinkel von hinterlegten Zähnen und Zähnen des Kupplungskörpers können ohne Rücksicht auf die Anspitzung der nicht hinterlegten Zähne dazu optimiert werden, einen möglichst günstigen Einspurvorgang der Schaltmuffenverzahnung in die Kupplungskörperverzahnung zu realisieren.

Dabei ist es besonders bevorzugt, wenn die hinterlegten und die hinterlegungsfreien Zähne jeweils in Gruppen von zwei oder mehr Zähnen aufgeteilt sind, wobei die Gruppen über den Umfang der Schaltmuffe abwechselnd angeordnet sind.

Durch die abwechselnde Anordnung kann eine Gleichverteilung der hinterlegten bzw. der hinterlegungsfreien Zähne über den Umfang der Schaltmuffe realisiert werden. Die Elemente der Schaltkupplung können unwuchtfrei hergestellt werden.

Dabei ist es besonders bevorzugt, wenn die hinterlegten und die hinterlegungsfreien Zähne jeweils in drei Gruppen aufgeteilt sind.

Dies führt auf der einen Seite zu einer günstigen Herstellung. Andererseits ist auch auf einfache Weise eine Anpassung an konstruktive Randbedingungen wie Lage von Arretierungen etc. möglich.

Gemäß einer besonders bevorzugten Ausführungsform ist die Anzahl der hinterlegten und der hinterlegungsfreien Zähne gleich.

Auf diese Weise kann jeweils die Hälfte der Zähne für den Eingriff zwischen Schaltmuffe und Kupplungskörper bzw. zwischen Schaltmuffe und Führungsmuffe herangezogen werden, so daß sich eine Gleichlast in Umfangsrichtung ergibt.

Gemäß einer weiteren bevorzugten Ausführungsform weisen die hinterlegungsfreien Zähne eine geringere effektive Breite auf als die hinterlegten Zähne.

Hierdurch wird erreicht, daß die hinterlegungsfreien Zähne nicht mit Flanken der Außenverzahnung des Kupplungskörpers in Eingriff treten, selbst wenn die hinterlegungsfreien Zähne in diese Verzahnung eingespurt sind.

Auch ist es von Vorteil, wenn die Schaltkupplung ferner einen Synchronring aufweist, der mit einer Außenverzahnung versehen ist, die mit den hinterlegungsfreien Zähnen in Eingriff tritt, nicht jedoch mit den hinterlegten Zähnen.

Bei dieser Ausgestaltung ist die Schaltkupplung als Sperr-Synchronisierung ausgebildet. Der Synchronring ist in an sich bekannter Weise begrenzt verdrehbar gegenüber der Führungsmuffe gelagert. Durch die Tatsache, daß die Außenverzahnung des Synchronrings nur mit den hinterlegungsfreien Zähnen in Eingriff tritt, ist ein Verhaken bzw. Verklemmen zwischen der Verzahnung der Schaltmuffe und der Verzahnung des Synchronringes ebenfalls weitgehend unmöglich.

Dadurch, daß nur die hinterlegungsfreien Zähne mit der Verzahnung des Synchronringes in Eingriff treten, kann die Anspitzung der hinterlegungsfreien Zähne und der Verzahnung des Synchronringes unabhängig von der Anspitzung der hinterlegten Zähne gewählt werden.

Somit ist es möglich, die Anspitzung der hinterlegungsfreien Zähne der Schaltmuffe bzw. der Zähne des Synchronringes an das Sperrverhalten (Sperrbedingung!) anzupassen, ohne Rücksicht auf die Einspurbedingungen in den Kupplungskörper.

Generell ist es jedoch auch möglich, die Anspitzungen der hinterlegten und der hinterlegungsfreien Zähne identisch auszubilden, bspw. aus fertigungstechnischen Gründen.

Von besonderem Vorzug ist es dabei, wenn die Außenverzahnung des Synchronrings nur dort Zähne aufweist, wo die Schaltmuffe nicht hinterlegte Zähne aufweist.

Mit anderen Worten wird eine Außenverzahnung an dem Synchronring nur dort vorgesehen, wo ein Eingriff mit der Verzahnung der Schaltmuffe möglich ist.

Gleichermaßen ist es von Vorteil, wenn die Außenverzahnung der Führungsmuffe nur dort Zähne aufweist, wo die Schaltmuffe hinterlegungsfreie Zähne aufweist.

Hierdurch wird das aufwendige Herstellen einer Verzahnung an der Führungsmuffe in jenen Bereichen vermieden, wo keine Verzahnung notwendig ist.

Dabei ist es von besonderem Vorzug, wenn die Führungsmuffe zumindest in solchen Umfangsbereichen keine Zähne aufweist, in denen Arretierungen (oder Drucksteine) für die Schaltmuffe angeordnet sind.

Arretierungen für die nicht geschaltete Position der Schaltkupplung sind gewöhnlich in Ausnehmungen der Führungsmuffe angeordnet. Es versteht sich daher, daß die Schaltkupplung vorzugsweise so ausgelegt wird, daß in genau jenen Bereichen keine Verzahnung notwendig ist.

Insgesamt ist es ebenfalls von Vorteil, wenn wenigstens einige Zähne der Innenverzahnung der Schaltmuffe mit vom Kopf aus radial nach innen vorstehenden Anschlägen zur Schaltwegbegrenzung ausgestattet sind.

Hierdurch ist es möglich, den Schaltweg auf konstruktiv einfache Weise zu begrenzen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht einer Schaltmuffe einer erfindungsgemäßen Schaltkupplung;
- Fig. 2: eine schematische Seitenansicht auf eine Schaltmuffe einer erfindungsgemäßen Schaltkupplung;
- Fig. 3: eine Detailansicht der Schaltmuffe von Fig. 1 in perspektivischer Darstellung;
- Fig. 4: eine weitere Detailansicht der Schaltmuffe von Fig. 1 in perspektivischer Darstellung;
- Fig. 5: eine perspektivische Darstellung einer Führungsmuffe einer erfindungsgemäßen Schaltkupplung;
- Fig. 6: eine perspektivische Darstellung eines Synchronrings einer erfindungsgemäßen Schaltkupplung;
- Fig. 7: eine schematische Schnittansicht einer Abwicklung der in Eingriff stehenden Verzahnungen von Schaltmuffe und Führungsmuffe; und
- Fig. 8: eine schematische Teilansicht eines Längsschnittes durch eine Abwicklung einer erfindungsgemäßen Schaltkupplung.

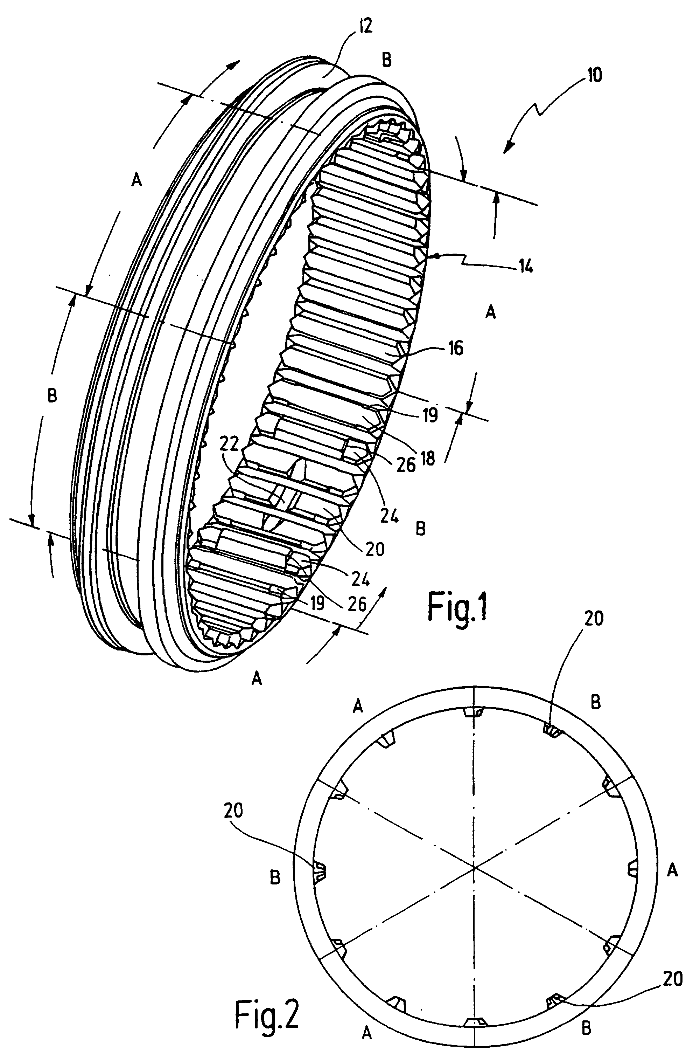

In den Figuren 1, 3 und 4 ist eine Schaltmuffe einer erfindungsgemäßen Schaltkupplung generell mit 10 bezeichnet.

Genauer gesagt ist die Schaltmuffe 10 Teil eines vom Aufbau an sich bekannten Synchronpaketes, das zwei Schaltkupplungen für zwei benachbarte Losräder aufweist, die an einer Welle eines Stirnradgetriebes, insbesondere eines Kraftfahrzeuggetriebes drehbar gelagert sind.

Das Stirnradgetriebe kann ein herkömmliches Handschaltgetriebe oder ein automatisiertes Handschaltgetriebe sein. Auch ist es möglich, daß das Stirnradgetriebe ein Doppelkupplungsgetriebe ist.

Der grundlegende Aufbau des Synchronpaketes ist im Stand der Technik bekannt und wird im folgenden nur kurz beschrieben. An der Welle des Stirnradgetriebes ist eine Führungsmuffe festgelegt, bspw. mittels einer Keilnut-Verzahnung und einem axialen Sicherungsring. An einer Außenverzahnung der Führungsmuffe ist die Schaltmuffe 10 in axialer Richtung beweglich gelagert.

An den beiden Losrädern ist jeweils ein Kupplungskörper mit einer Außenverzahnung festgelegt. Der Kupplungskörper kann auf beliebige Weise mit dem jeweiligen Losrad verbunden sein. Bspw. kann der Kupplungskörper einstückig an dem Losrad ausgebildet sein. Alternativ hierzu wird der Kupplungskörper mittels einer Keilnut-Verzahnung an dem Losrad festgelegt, oder an das Losrad geschweißt etc.

Der Kupplungskörper weist eine Außenverzahnung auf, die der Außenverzahnung der Führungsmuffe entspricht.

Zum Herstellen eines Formschlusses zwischen Welle und Losrad wird die Schaltmuffe in axialer Richtung so bewegt, daß die Innenverzahnung der Schaltmuffe in die Außenverzahnung des Kupplungskörpers einspurt.

Ferner weist jede der zwei Schaltkupplungen des Synchronpaketes einen dem Grunde nach bekannten Synchronring auf. Der Synchronring ist begrenzt verdrehbar an der Führungsmuffe gelagert.

Bei einer Einfachkonus-Schaltkupplung ist in der Regel an dem Synchronring eine mit einem Reibbelag versehene Konusfläche vorgesehen, die dazu ausgelegt ist, mit einer entsprechenden Konusfläche an dem Losrad, bspw. an dem Kupplungskörper zusammenzuwirken. Bei Mehrfachkonus-Schaltkupplungen ist die Konusfläche des Synchronringes blank oder mit einem Reibbelag versehen und es sind Taschen zum Mitnehmen eines weiteren Kegelringes vorgesehen.

In jedem Fall weist der Synchronring eine Außenverzahnung auf, die der Verzahnung der Führungsmuffe entspricht. Die Außenverzahnung des Synchronringes dient als Sperrverzahnung. Die Schaltmuffe drückt bei ihrer Axialbewegung mittels Arretierungen an den Synchronring. Dieser wird aufgrund einer Differenzdrehzahl zwischen Kupplungskörper und Synchronring verdreht, und zwar in eine Sperrstellung, bei der die Zähne des Synchronringes der Verzahnung der Schaltmuffe gegenüber liegen. Sobald Drehzahlgleichheit erzielt ist, bricht das Reibmoment zusammen und der Synchronring läßt sich in eine Freigabestellung verdrehen. Die Schaltmuffe spurt durch die Verzahnung des Synchronringes hindurch in die Verzahnung des Kupplungskörpers ein.

Die in den Figuren 1, 3 und 4 gezeigte Schaltmuffe 10 weist in an sich herkömmlicher Weise eine radiale Außennut 12 auf, in die eine Schaltgabel eines Schaltgestänges greifen kann, um die Schaltmuffe 10 in axialer Richtung zu bewegen.

Ferner weist die Schaltmuffe 10 eine Innenverzahnung 14 auf, die aus nicht hinterlegten bzw. hinterlegungsfreien Zähnen 16 und hinterlegten Zähnen 18 besteht.

Die hinterlegungsfreien Zähne 16 sind in drei Gruppen A zu jeweils sieben Zähnen zusammengefaßt. Die hinterlegten Zähne 18 sind ebenfalls in drei Gruppen B zu jeweils 7 Zähnen zusammengefaßt. Die Gruppen A, B sind über den Umfang der Schaltmuffe 10 abwechselnd angeordnet. Zwischen den jeweiligen Gruppen A, B sind jeweils Zähne vorgesehen, die auf der einen Flanke hinterlegt und auf der anderen Flanke hinterlegungsfrei sind.

Insgesamt weist die Innenverzahnung 14 folglich einundzwanzig hinterlegte Zähne 18, einundzwanzig hinterlegungsfreie Zähne 16 und sechs Zwischenzähne auf.

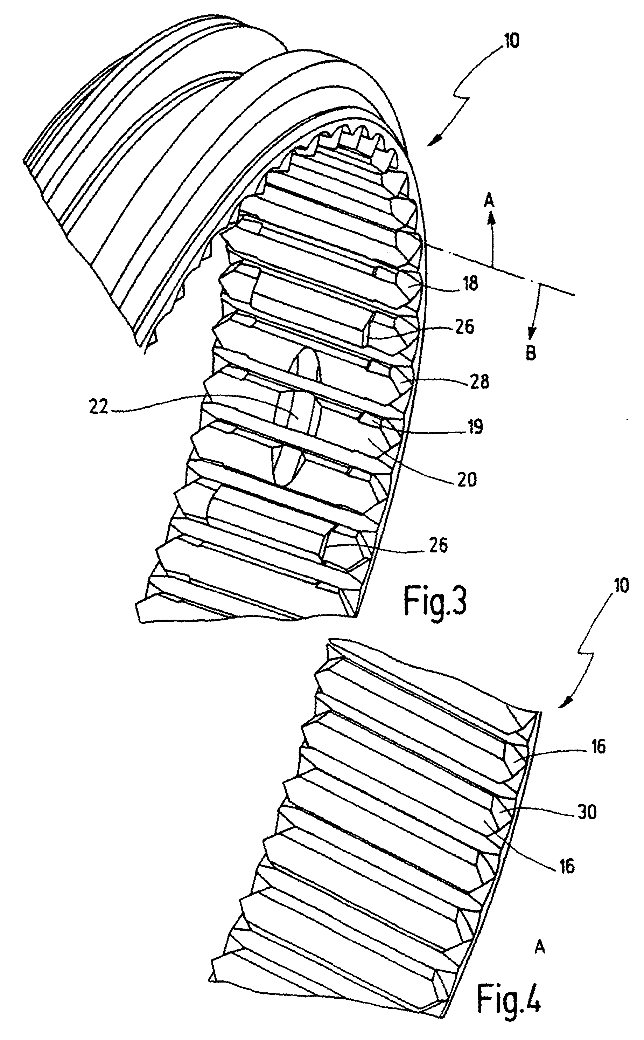

Die Hinterlegungen der Zähne 18 sind in Fig. 1 und 3 bei 19 gezeigt. Die Hinterlegungen 19 sind vergleichsweise kurz in axialer Richtung und erstrecken sich über nicht mehr als etwa 1/4 bis 1/5 der axialen Gesamtlänge des Zahnes.

In einem jeweiligen mittleren Zahn 20 der Gruppen B ist eine Rastvertiefung 22 vorgesehen. Auch die zu dem jeweiligen mittleren Zahn 20 benachbarten zwei Zähne weisen im vorliegenden Fall noch Teile einer derartigen Rastvertiefung auf.

Wie oben erwähnt, dient die Schaltmuffe 10 zum Betätigen von zwei Schaltkupplungen. Im folgenden wird jeweils lediglich auf die eine axiale Seite der Verzahnung 14 eingegangen. Es versteht sich jedoch, daß die andere axiale Seite der Verzahnung 14 entsprechend aufgebaut ist.

Zwei weitere Zähne 24 einer jeden Gruppe B, und zwar die jeweils von dem mittleren Zahn 20 aus übernächsten Zähne 24, sind als Anschlagzähne 24 zur Schaltwegbegrenzung ausgebildet. Zu diesem Zweck weisen die Anschlagzähne 24 jeweils einen von ihrem Kopf in radialer Richtung nach innen vorstehenden Anschlag 26 auf. Der Anschlag 26 läuft bei einem Schaltvorgang gegen eine entsprechende Anschlagfläche an dem jeweiligen Kupplungskörper.

Die hinterlegten Zähne 18 sind, wie es in Fig. 3 zu erkennen ist, an ihren axialen Enden jeweils mit einer Anspitzung 28 versehen.

Entsprechend sind die hinterlegungsfreien Zähne 16 an ihren axialen Enden mit einer jeweiligen Anspitzung 30 versehen.

Fig. 2 zeigt die Aufteilung des Umfangs einer Schaltmuffe 10 in schematischer Form. Es ist zu erkennen, daß sich die Gruppen A und B jeweils über einen Winkelbereich von 60° erstrecken.

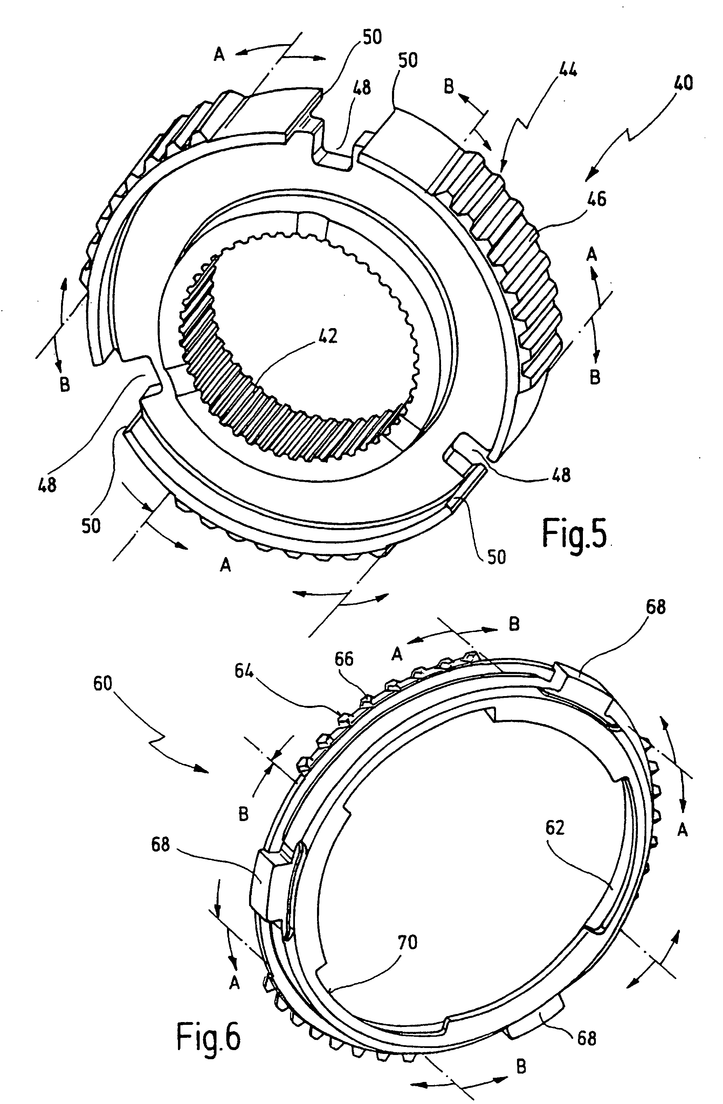

In Fig. 5 ist eine Führungsmuffe 40 gemäß einer Ausführungsform der erfindungsgemäßen Schaltkupplung gezeigt.

Die Führungsmuffe 40 weist eine Innenkeilnut-Verzahnung 42 auf, zur drehfesten Verbindung mit einer Welle des Stirnradgetriebes.

An ihrem Außenumfang ist die Führungsmuffe 40 mit einer Außenverzahnung 44 versehen. Die Außenverzahnung 44 weist hinterlegungsfreie Zähne 46 auf. Die Zähne 46 sind lediglich an solchen Umfangsabschnitten der Führungsmuffe 40 vorgesehen, die den Umfangsabschnitten A entsprechen, in denen die Schaltmuffe 10 hinterlegungsfreie Zähne 16 aufweist. In den entsprechenden dazwischenliegenden Umfangsabschnitten ist die Führungsmuffe 40 verzahnungsfrei ausgebildet.

Ferner ist zu sehen, daß die Führungsmuffe 40 in den verzahnungsfreien Abschnitten jeweils eine mittige, radial nach innen gehende Außennut 48 aufweist. Die Außennut 48 dient zur Aufnahme von Arretierungen, die dazu ausgelegt sind, in die Rastvertiefung 22 der Schaltmuffe 10 einzurasten.

Ferner weist die Führungsmuffe 40 benachbart zu den Außennuten 48 jeweilige Sperranschläge 50 auf, die dazu dienen, die begrenzte Verdrehbarkeit eines nachstehend erörterten Synchronringes in bezug auf die Führungsmuffe 40 zu gewährleisten.

In Fig. 6 ist eine Ausführungsform eines Synchronringes 60 für eine erfindungsgemäße Schaltkupplung gezeigt.

Der Synchronring 60 weist an seinem Innenumfang eine Konusfläche 62 auf. Im vorliegenden Fall ist der Synchronring 60 Teil einer Mehrfachkegel-Synchronisierung. In der gezeigten Ausführungsform weist die Konusfläche 62 keinen Reibbelag auf. Die Konusfläche 62 steht mit einem weiteren, nicht näher dargestellten Kegelring in Wirkverbindung, der wiederum mit dem Kupplungskörper formschlüssig in Verbindung steht.

An seinem Außenumfang weist der Synchronring 60 eine Außenverzahnung 64 auf.

Die Außenverzahnung 64 weist eine Mehrzahl von Zähnen 66 auf, die ausschließlich in jenen Umfangsabschnitten des Synchronringes 60 ausgebildet sind, die den Abschnitten der Schaltmuffe 10 entsprechen, in denen die Gruppe A aus hinterlegungsfreien Zähnen 16 angeordnet ist.

In den zwischen den Bereichen A liegenden Umfangsabschnitten weist der Synchronring in an sich bekannter Weise Sperrnocken 68 auf, die zwischen die jeweiligen Sperranschläge 50 der Führungsmuffe 40 greifen.

Ferner weist der Synchronring 60 an seinem Innenumfang Mitnahmetaschen 70 für einen weiteren Kegelring (nicht gezeigt) auf.

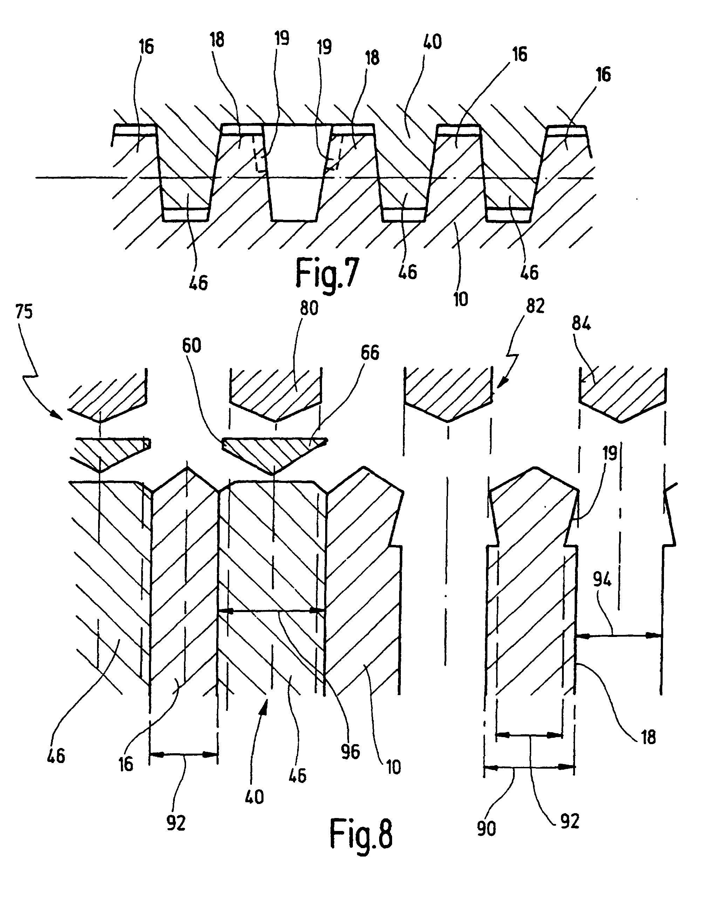

In Fig. 7 ist in sehr schematischer Form das Zusammenwirken zwischen der Verzahnung der Schaltmuffe und der Verzahnung der Führungsmuffe 40 gezeigt.

Es ist zu erkennen, daß Schaltmuffe 10 und Führungsmuffe 40 zueinander flankenzentriert sind. Ferner ist zu erkennen, daß die Führungsmuffe 40 in dem Bereich der Verzahnung 14 der Schaltmuffe, in dem hinterlegte Zähne 18 vorgesehen sind, keine Zähne aufweist.

In Fig. 8 ist in schematischer Form eine Längsschnittansicht durch eine Abwicklung der erfindungsgemäßen Schaltkupplung gezeigt, die in Fig. 8 generell mit 75 bezeichnet ist.

In Fig. 8 ist zunächst zusätzlich zu den bereits erläuterten Elementen (Schaltmuffe 10, Führungsmuffe 40 und Synchronring 60) ein Kupplungskörper 80 mit einer Außenverzahnung 82 gezeigt. Die Außenverzahnung 82 weist eine Mehrzahl von Zähnen 84 auf.

In Fig. 8 ist ferner zu sehen, daß die hinterlegten Zähne eine effektive Breite 90 besitzen. Die - kleinere - Breite der Zähne 18 im Bereich der tiefsten Stellen der Hinterlegungen 19 ist bei 92 gezeigt.

In Fig. 8 ist zu erkennen, daß die Zähne 84 des Kupplungskörpers 80 voneinander beabstandet sind in Übereinstimmung mit der effektiven Breite 90. Mit anderen Worten entspricht die effektive Breite der Zähne 84 dem Abstand 94 der hinterlegten Zähne 18.

In Fig. 8 ist ferner zu erkennen, daß die nicht hinterlegten bzw. hinterlegungsfreien Zähne 16 eine effektive Breite 92 besitzen, die der Breite der hinterlegten Zähne 18 im Bereich der Hinterlegungen 19 entspricht.

Mit anderen Worten ist die effektive Breite 92 der hinterlegungsfreien Zähne 16 kleiner als die effektive Breite der hinterlegten Zähne 18.

Der Abstand 96 der hinterlegungsfreien Zähne 16 ist angepaßt an die Breite der Zähne 46 der Führungsmuffe 40 bzw. die Breite der Zähne 66 des Synchronringes 60.

Man erkennt in Fig. 8 ferner, daß die hinterlegten Zähne 18 nicht mit den Zähnen 46 der Führungsmuffe 40 in Eingriff stehen. Genauso ist in Fig. 8 zu erkennen, daß die hinterlegungsfreien Zähne 16 dann, wenn die Verzahnung 14 der Schaltmuffe in die Verzahnung 82 des Kupplungskörpers 80 eingespurt ist, nicht an den Zähnen 84 des Kupplungskörpers 80 anliegen, jedenfalls nicht zur Kraftübertragung in Umfangsrichtung beitragen. Vielmehr treten die hinterlegten Zähne 18 mit den Zähnen 84 in Eingriff. Es versteht sich, daß in an sich üblicher Weise die Zähne 84 des Kupplungskörpers 80 in entsprechender Weise hinterlegt sein können.

Die Flanken der hinterlegungsfreien Zähne 16 sind nicht durch Hinterlegungen unterbrochen, so daß die Gleiteigenschaften stark verbessert sind. Die damit einhergehende Führungslängenerhöhung bringt eine deutliche Einengung des Kippspiels.

Die hinterlegten Zähne 18 treten nicht mit der Verzahnung 64 des Synchronringes 60 in Eingriff, so daß vermieden wird, daß der Synchronring nach Aufheben der Sperrbedingung durch solche Störkorrekturen nochmals angedrückt wird.

Ferner können die Anspitzungen der Zähne 16 und der Zähne 66 ohne Rücksicht auf das nachfolgende Einspuren der hinterlegten Zähne 18 in den Kupplungskörper frei gewählt werden.

Insgesamt können folglich die einzelnen Funktionselemente der Schaltkupplung (wie Anspitzung, Hinterlegung, Verzahnung etc.) durch die räumliche Trennung jeweils unabhängig voneinander optimiert werden.

Insgesamt ist so eine Schaltkupplung mit einer deutlich besseren Bedienbarkeit und geringerem Verschleiß realisierbar.

Die hinterlegten Zähne 18 sind nur mit der Verzahnung 82 des Kupplungskörpers 80 im Eingriff. Dies ermöglicht eine Verkürzung der Hinterlegungslänge, d.h. es ergibt sich eine minimale Zerspanung und eine erhöhte Festigkeit des Zahnes.

Durch die integrierte Schaltwegbegrenzung mittels der Anschläge 26 werden aufwendige Lösungen mit zusätzlichen Bauteilen vermieden.

Die Anspitzwinkel der hinterlegten Zähne 18 können an die Erfordernisse des Einspurvorganges angepaßt werden, ohne dabei den Ablauf des Sperrvorganges zu beeinflussen.

Die Führungsmuffe kann als Sinterteil oder als gehärtetes Stahlteil ausgeführt sein.

Insgesamt ergeben sich verbesserte Gleiteigenschaften, ein reduziertes Kippverhalten. Das Einspurverhalten ist verbessert. Gangspringer können vermieden werden.

## Patentansprüche

1. Schaltkupplung (75) für ein Stirnradgetriebe, insbesondere ein Kraftfahrzeuggetriebe, mit einer Führungsmuffe (40), die an einer Welle des Stirnradgetriebes festlegbar ist und eine Außenverzahnung (44) aufweist, einer Schaltmuffe (10), die eine Innenverzahnung (14) aufweist, die mit der Außenverzahnung (44) der Führungsmuffe (40) kämmt, so, daß die Schaltmuffe (10) axial gegenüber der Führungsmuffe (40) verschieblich ist, und einem Kupplungskörper (80), der an einem Losrad festlegbar ist, das an der Welle drehbar gelagert ist, und eine Außenverzahnung (82) aufweist, in die die Innenverzahnung (14) der Schaltmuffe (10) geschoben werden kann, um den Kupplungskörper (80) in Drehrichtung formschlüssig mit der Führungsmuffe (40) zu verbinden, wobei die mit der Außenverzahnung (82) des Kupplungskörpers (80) in Eingriff tretende Innenverzahnung (14) der Schaltmuffe (10) Zähne (18) mit einer Hinterlegung (19) und ferner hinterlegungsfreie Zähne (16) aufweist, die mit der Außenverzahnung (44) der Führungsmuffe (40) in Eingriff stehen, woher die hinterlegten und die hinterlegungsfreien Zähne (16, 18) über den Umfang der Schaltmuffe (10) verteilt angeordnet sind, und mit Mitteln, um Verklemmungen zwischen den hinterlegten Zähnen (18) und der Außenverzahnung (44) der Führungsmuffe (40) zu vermeiden,
**dadurch gekennzeichnet, daß**
die hinterlegten Zähne (18) der Innenverzahnung (14) der Schaltmuffe (10) mit der Außenverzahnung (82) des Kupplungskörpers (80), jedoch nicht mit der Außenverzahnung (44) der Führungsmuffe (40) in Eingriff treten.

2. Schaltkupplung nach Anspruch 1, **dadurch gekennzeichnet, daß** die hinterlegten und die hinterlegungsfreien Zähne (16, 18) jeweils in Gruppen (A, B) von zwei oder mehr Zähnen aufgeteilt sind, wobei die Gruppen (A, B) über den Umfang der Schaltmuffe (10) abwechselnd angeordnet sind.

3. Schaltkupplung nach Anspruch 2, **dadurch gekennzeichnet, daß** die hinterlegten und die hinterlegungsfreien Zähne (16, 18) jeweils in drei Gruppen (A, B) aufgeteilt sind.

4. Schaltkupplung nach einem der Ansprüche 1 bis 3, **dadurch gekennzeichnet, daß** die Anzahl der hinterlegten und der hinterlegungsfreien Zähne (16, 18) gleich ist.

5. Schaltkupplung nach einem der Ansprüche 1 bis 4, **dadurch gekennzeichnet, daß** die hinterlegungsfreien Zähne (16) eine geringere effektive Breite (92) aufweisen als die hinterlegten Zähne (18).

6. Schaltkupplung nach einem der Ansprüche 1 bis 5, **dadurch gekennzeichnet, daß** die Schaltkupplung (75) ferner einen Synchronring (60) aufweist, der mit einer Außenverzahnung (64) versehen ist, die mit den hinterlegungsfreien Zähnen (16) in Eingriff tritt, nicht jedoch mit den hinterlegten Zähnen (18).

7. Schaltkupplung nach Anspruch 6, **dadurch gekennzeichnet, daß** die Außenverzahnung (64) des Synchronrings (60) nur dort Zähne (66) aufweist, wo die Schaltmuffe (10) hinterlegungsfreie Zähne (16) aufweist.

8. Schaltkupplung nach einem der Ansprüche 1 bis 7, **dadurch gekennzeichnet, daß** die Außenverzahnung (44) der Führungsmuffe (40) nur dort Zähne (46) aufweist, wo die Schaltmuffe (10) hinterlegungsfreie Zähne (16) aufweist.

9. Schaltkupplung nach Anspruch 8, **dadurch gekennzeichnet, daß** die Führungsmuffe (40) zumindest in solchen Umfangsbereichen keine Zähne aufweist, in denen Arretierungen für die Schaltmuffe (10) angeordnet sind.

10. Schaltkupplung nach einem der Ansprüche 1 bis 9, **dadurch gekennzeichnet, daß** wenigstens einige Zähne (24) der Innenverzahnung (14) der Schaltmuffe (10) mit vom Kopf aus radial nach innen vorstehenden Anschlägen (26) zur Schaltwegbegrenzung ausgestattet sind.

## Claims

1. Shift clutch (75) for a spur-wheel transmission, in particular a motor vehicle transmission, with a guide sleeve (40) which can be secured to a shaft of the spur-wheel transmission and has an external toothing (44), with a shift sleeve (10) having an internal toothing (14) which meshes with the external toothing (44) of the guide sleeve (40), so that the shift sleeve (10) is displaceable axially with respect to the guide sleeve (40), and with a clutch body (80) which can be secured to a loose wheel mounted rotatably on the shaft and has an external toothing (82), into which the internal toothing (14) of the shift sleeve (10) can be pushed, in order to connect the clutch body (80) to the guide sleeve (40) positively in the direction of rotation, the said internal toothing coming into engagement with the external toothing (82) of the clutch body (80), having teeth (18) with an undercut (19) and, furthermore, undercut-free teeth (16) which are in engagement with the external toothing (44) of the guide sleeve (40), the undercut and the undercut-free teeth (16, 18) being arranged so as to be distributed over the circumference of the shift sleeve (10), and with means for preventing jamming between the undercut teeth (18) and the external toothing (44) of the guide sleeve (40), **characterized in that** the undercut teeth (18) of the internal toothing (14) of the shift sleeve (10) come into engagement with the external toothing (82) of the clutch body (80), but not with the external toothing (44) of the guide sleeve (40).

2. Shift clutch according to claim 1, **characterized in that** the undercut and the undercut-free teeth (16, 18) are divided in each case into groups (A, B) of two or more teeth, the groups (A, B) being arranged alternately over the circumference of the shift sleeve (10).

3. Shift clutch according to claim 2, **characterized in that** the undercut and the undercut-free teeth (16, 18) are divided in each case into three groups (A, B).

4. Shift clutch according to one of claims 1 to 3, **characterized in that** the number of undercut teeth and the number of undercut-free teeth (16, 18) are equal.

5. Shift clutch according to one of claims 1 to 4, **characterized in that** the undercut-free teeth (16) have a smaller effective width (92) than the undercut teeth (18).

6. Shift clutch according to one of claims 1 to 5, **characterized in that** the shift clutch (75) has, furthermore, a synchronizing ring (60) provided with an external toothing (64) which comes into engagement with the undercut-free teeth (16), but not with the undercut teeth (18).

7. Shift clutch according to claim 6, **characterized in that** the external toothing (64) of the synchronizing ring (60) has teeth (66) only where the shift sleeve (10) has undercut-free teeth (16).

8. Shift clutch according to one of claims 1 to 7, **characterized in that** the external toothing (44) of the guide sleeve (40) has teeth (46) only where the shift sleeve (10) has undercut-free teeth (16).

9. Shift clutch according to claim 8, **characterized in that** the guide sleeve (40) has no teeth at least in those circumferential regions in which detents of the shift sleeve (10) are arranged.

10. Shift clutch according to one of claims 1 to 9, **characterized in that** at least some teeth (24) of the internal toothing (14) of the shift sleeve (10) are equipped with stops (26) for shift-travel limitation which project radially inwards from the head.

## Revendications

1. Embrayage (75) pour un engrenage droit, en particulier une transmission de véhicule automobile, avec un manchon de guidage (40) qui peut être fixé à un arbre de l'engrenage droit et comporte une denture extérieure (44), un manchon de commutation (10) qui présente une denture intérieure (14), laquelle engrène avec la denture extérieure (44) du manchon de guidage (40), de manière que le manchon de commutation (10) puisse coulisser axialement par rapport au manchon de guidage (40), et avec un corps d'accouplement (80) qui peut être fixé à une roue libre, laquelle est montée tournante sur l'arbre et présente une denture extérieure (82) dans laquelle peut être introduite la denture intérieure (14) du manchon de commutation (10), afin de relier le corps d'accouplement (80) dans le sens de rotation, par complémentarité de formes, au manchon de guidage (40), la denture intérieure (14) du manchon de commutation (10), venant en prise avec la denture extérieure (82) du corps d'accouplement (80), présentant des dents (18) avec chanfrein (19) et en outre des dents (16) sans chanfrein qui sont en prise avec la denture extérieure (44) du manchon de guidage (40), les dents chanfreinées et les dents sans chanfrein (16, 18) étant réparties sur le pourtour du manchon de commutation (10), et avec des moyens pour éviter des coincements entre les dents chanfreinées (18) et la denture extérieure (44) du manchon de guidage (40),
**caractérisé en ce que**
les dents chanfreinées (18) de la denture intérieure (14) du manchon de commutation (10) viennent en prise avec la denture extérieure (82) du corps d'accouplement (80), mais pas avec la denture extérieure (44) du manchon de guidage (40).

2. Embrayage selon la revendication 1, **caractérisé en ce que** les dents chanfreinées et les dents sans chanfrein (16, 18) sont réparties respectivement en groupes (A, B) de deux dents ou plus, les groupes (A, B) étant disposés en alternance sur le pourtour du manchon de commutation (10).

3. Embrayage selon la revendication 2, **caractérisé en ce que** les dents chanfreinées et les dents sans chanfrein (16, 18) sont réparties respectivement en trois groupes (A, B).

4. Embrayage selon l'une des revendications 1 à 3, **caractérisé en ce que** le nombre de dents chanfreinées et de dents sans chanfrein (16, 18) est le même.

5. Embrayage selon l'une des revendications 1 à 4, **caractérisé en ce que** les dents sans chanfrein (16) présentent une largeur effective (92) inférieure à celle des dents chanfreinées (18).

6. Embrayage selon l'une des revendications 1 à 5, **caractérisé en ce que** l'embrayage (75) comporte en outre une bague de synchronisation (60) qui est pourvue d'une denture extérieure (64), laquelle vient en prise avec les dents sans chanfrein (16), mais pas avec les dents chanfreinées (18).

7. Embrayage selon la revendication 6, **caractérisé en ce que** la denture extérieure (64) de la bague de synchronisation (60) ne présente des dents (66) que là où le manchon de commutation (10) comporte des dents sans chanfrein (16).

8. Embrayage selon l'une des revendications 1 à 7, **caractérisé en ce que** la denture extérieure (44) du manchon de guidage (40) ne présente des dents (46) que là où le manchon de commutation (10) présente des dents sans chanfrein (16).

9. Embrayage selon la revendication 8, **caractérisé en ce que** le manchon de guidage (40) ne présente pas de dents au moins dans les zones périphériques dans lesquelles sont prévus des dispositifs d'arrêt pour le manchon de commutation (10).

10. Embrayage selon l'une des revendications 1 à 9, **caractérisé en ce qu'**au moins quelques dents (24) de la denture intérieure (14) du manchon de commutation (10) sont équipées de butées (26), faisant saillie radialement vers l'intérieur depuis la tête, pour limiter le mouvement de commutation.
